# EUROPEAN PATENT APPLICATION

(11) **EP 3 333 308 A1**
(43) Date of publication of application: **13.06.2018**
(21) Application number: 16835125.2
(22) Date of filing: 01.08.2016
(51) Int. Cl.: D06M 15/233, C08J 5/06, D06M 14/36, D06M 15/263, D06M 101/40

(54) **INSULATED COATED CARBON FIBER, METHOD FOR MANUFACTURING INSULATED COATED CARBON FIBER, CARBON-FIBER-CONTAINING COMPOSITION, AND HEAT-CONDUCTING SHEET**

(30) Priority: 07.08.2015 JP 2015157335; 14.01.2016 JP 2016005513
(71) Applicant: Dexerials Corporation, Tokyo 141-0032 (JP)
(72) Inventor: KANAYA, Hiroki, Tokyo 141-0032 (JP)
(74) Representative: Murgitroyd & Company
(86) International application number: PCT/JP2016/073214
(87) International publication number: WO 2017/026428

(57) **Abstract**

Provided are insulation coated carbon fiber and a method of producing insulation coated carbon fiber having excellent electrical insulation while having high thermal conductivity. The insulation coated carbon fiber includes carbon fiber that is at least partially coated by an electrically insulative coating. The electrically insulative coating is a polymer formed from one type or two or more types of a polymerizable compound having a double bond, at least one of which is a polymerizable compound including at least two polymerizable functional groups.

## Description

### TECHNICAL FIELD

The present disclosure relates to insulation coated carbon fiber, a method of producing insulation coated carbon fiber, a carbon fiber-containing composition, and a thermally conductive sheet that have excellent electrical insulation while having high thermal conductivity.

### BACKGROUND

In semiconductor elements incorporated into various electrical devices, such as personal computers, and other devices, heat is generated upon operation of these semiconductor elements. Since the build-up of generated heat may negatively affect operation of these semiconductor elements or surrounding devices, various cooling means are conventionally used. Examples of known methods of cooling semiconductor elements and other electronic components include a method in which a fan is attached to the corresponding device in order to cool air inside the casing of the device and a method in which a heat sink such as a heat-dissipating fin or a heat-dissipating plate is attached to a semiconductor element that is to be cooled.

In a case in which cooling is performed through attachment of a heat sink to a semiconductor element as described above, a thermally conductive sheet may be provided between the semiconductor element and the heat sink to enable efficient dissipation of heat from the semiconductor element. The thermally conductive sheet is typically formed from a silicone resin in which a filler, such as a thermally conductive filler, is dispersed, and one example of a thermally conductive filler that can suitably be used is carbon fiber (refer to PTL 1).

Although carbon fiber has excellent thermal conductivity, it also has high electrical conductivity, which is problematic. This may lead to malfunction of an electronic component in a situation in which a thermally conductive sheet that contains carbon fiber comes into contact with a circuit located peripherally to the semiconductor element or in which a defect occurs in the sheet and drops onto a circuit because a short may occur due to carbon fiber exposed at the surface of the sheet.

For this reason, techniques are being developed in relation to electrical insulation coating of carbon fiber with the aim of increasing electrical insulation of carbon fiber.

For example, PTL 2 discloses a technique for insulation coating of carbon fiber with a resin. Moreover, PTL 3 to 7 disclose techniques for insulation coating of carbon fiber with an inorganic material.

### CITATION LIST

### Patent Literature

PTL 1: JP 2012-001638 A
PTL 2: JP 2013-007124 A
PTL 3: JP 4973569 B
PTL 4: JP 2013-122003 A
PTL 5: JP 2004-218144 A
PTL 6: JP 5166689 B
PTL 7: JP 4920135 B

### SUMMARY

### (Technical Problem)

However, the technique in PTL 2 involves production by immersing carbon fiber in dissolved resin, which is problematic because aggregation of individual carbon fibers that are insulation coated reduces thermal conductivity, and adequate electrical insulation cannot be achieved.

Moreover, the techniques in PTL 3 to 7 suffer from a problem that adequate electrical insulation cannot be ensured through insulation coating with an inorganic material.

The present disclosure was completed in view of the situation set forth above and an objective thereof is to provide insulation coated carbon fiber and a method of producing insulation coated carbon fiber having excellent electrical insulation while having high thermal conductivity. Another objective of the present disclosure is to provide a carbon fiber-containing composition and a thermally conductive sheet that are obtained using this insulation coated carbon fiber and that have excellent thermal conductivity and electrical insulation.

### (Solution to Problem)

The inventor conducted diligent and extensive studies relating to insulation coated carbon fiber with the aim of solving the problems set forth above. As a result, the inventors discovered that electrical insulation can be significantly improved while maintaining high thermal conductivity by using a polymer formed from a specific polymerizable compound as an electrically insulative coating.

Moreover, with regards to production conditions of insulation coated carbon fiber, the inventors discovered that an electrically insulative coating of a polymer formed from the aforementioned polymerizable compound can be formed by mixing the polymerizable compound with carbon fiber and a reaction initiator in a solvent, and imparting energy thereto.

The present disclosure was completed based on these findings and its primary features are as follows.
[1] Insulation coated carbon fiber comprising carbon fiber that is at least partially coated by an electrically insulative coating, wherein the electrically insulative coating is a polymer formed from one type or two or more types of a polymerizable compound having a double bond, at least one of which is a polymerizable compound including at least two polymerizable functional groups.
   Through this configuration, excellent electrical insulation can be achieved while maintaining high thermal conductivity.
[2] The insulation coated carbon fiber according to the foregoing [1], wherein the polymerizable compound including at least two polymerizable functional groups is divinylbenzene.
[3] The insulation coated carbon fiber according to the foregoing [1], wherein the polymerizable compound including at least two polymerizable functional groups is a (meth)acrylate compound.
[4] The insulation coated carbon fiber according to any one of the foregoing [1] to [3], wherein the electrically insulative coating has an average thickness of 50 nm or more.
[5] A method of producing insulation coated carbon fiber comprising: mixing one type or two or more types of a polymerizable compound having a double bond, carbon fiber, and a reaction initiator with a solvent to obtain a mixture; and subsequently stirring the mixture while imparting energy on the mixture to form a coating of a polymer formed from the polymerizable compound on at least part of the carbon fiber.
[6] The method of producing insulation coated carbon fiber according to the foregoing [5], wherein the solvent is a solvent in which the polymerizable compound dissolves and the polymer formed from the polymerizable compound does not dissolve.
[7] The method of producing insulation coated carbon fiber according to the foregoing [5] or [6], wherein the energy is imparted by heating, and the mixture has a temperature of 0°C to 200°C in the heating.
[8] A carbon fiber-containing composition comprising the insulation coated carbon fiber according to any one of the foregoing [1] to [4].
[9] A thermally conductive sheet comprising the carbon fiber-containing composition according to the foregoing [8].

### (Advantageous Effect)

According to the present disclosure, it is possible to provide insulation coated carbon fiber and a method of producing insulation coated carbon fiber having excellent electrical insulation while having high thermal conductivity. Moreover, it is possible to provide a carbon fiber-containing composition and a thermally conductive sheet that are obtained using this insulation coated carbon fiber and that have excellent thermal conductivity and electrical insulation.

### BRIEF DESCRIPTION OF THE DRAWINGS

In the accompanying drawings:
FIG. 1 illustrates process flow in one embodiment of a method of producing insulation coated carbon fiber according to the present disclosure;
FIG. 2 illustrates a process by which insulation coated carbon fiber according to the present disclosure is formed; and
FIG. 3A is a TEM image illustrating a cross-section of insulation coated carbon fiber obtained in Example 1 and FIG. 3B is a scanning ion microscope (SIM) image of the insulation coated carbon fiber as viewed from the side.

### DETAILED DESCRIPTION

The following provides a specific description of the present disclosure.

### <Insulation coated carbon fiber>

First, insulation coated carbon fiber according to the present disclosure is described.

The insulation coated carbon fiber according to the present disclosure comprises carbon fiber that is at least partially coated by an electrically insulative coating.

The electrically insulative coating of the insulation coated carbon fiber according to the present disclosure is a polymer formed from one type or two or more types of a polymerizable compound having a double bond, at least one of which is a polymerizable compound including at least two polymerizable functional groups.

By using a compound that has a double bond and includes at least two polymerizable functional groups as a material of the electrically insulative coating, a coating can be formed that has excellent electrical insulation compared to conventional coatings, and, as a result, electrical insulation can be significantly improved while maintaining high thermal conductivity.

### (Carbon fiber)

The carbon fiber that is a constituent of the insulation coated carbon fiber according to the present disclosure can be selected as appropriate depending on the application without any specific limitations.

Examples of types of carbon fiber that can be used include organic carbon fiber such as PAN-based carbon fiber, pitch-based carbon fiber, rayon-based carbon fiber, and polybenzazole-based carbon fiber, and vapor-grown carbon fiber. Of these types of carbon fiber, pitch-based carbon fiber and polybenzazole-based carbon fiber are preferable in terms of having high elastic modulus, good thermal conductivity, low thermal expansion, and so forth.

Moreover, the diameter and length of the carbon fiber can be set as appropriate depending on the application without any specific limitations. For example, carbon fiber having an average length of 30 µm to 300 µm and an average diameter of approximately 0.5 µm to 30 µm is preferable in terms of ease of handling and ensuring thermal conductivity.

The carbon fiber may have functional groups at the surface thereof as necessary in order to increase close adherence with the electrically insulative coating. Examples of carbon fiber having a large number of functional groups at the surface thereof include carbon fiber that has been heat treated at 800°C to 1500°C and carbon fiber that has been subjected to oxidation treatment.

The method of oxidation treatment of the carbon fiber may be a dry method or a wet method. One example of a dry method is a method in which the carbon fiber is subjected to heat treatment in air at approximately 400°C to 800°C. One example of a wet method is a method in which the carbon fiber is immersed in fuming sulfuric acid.

Moreover, the carbon fiber that is used may be a product resulting from pulverization or disintegration of obtained fiber, or may be a product resulting from aggregation of individual carbon fibers in the form of a flake.

### (Electrically insulative coating)

The electrically insulative coating that is a constituent of the insulation coated carbon fiber according to the present disclosure is formed such as to coat at least part of the carbon fiber and brings about electrical insulation of the carbon fiber.

As previously described, the electrically insulative coating is a polymer formed from one type or two or more types of a polymerizable compound having a double bond, at least one of which is a polymerizable compound including at least two polymerizable functional groups. This enables the achievement of excellent electrical insulation.

The polymerizable compound is a compound that has a property of being polymerized and cured through impartation of energy thereto in the form of heat, ultraviolet rays, or the like, and the polymerizable functional groups are groups used for crosslinking in curing.

Examples of the polymerizable compound having a double bond and including at least two polymerizable functional groups include specific vinyl compounds, acrylic compounds, and (meth)acrylic compounds. Of these examples, divinylbenzene or a (meth)acrylate compound is preferably used as the polymerizable compound. This is because even better electrical insulation can be obtained using these compounds.

Note that the term "(meth)acrylate compound" is a general term for both acrylates (acrylic acid compounds) and methacrylates (methacrylic acid compounds). No specific limitations are placed on the (meth)acrylate compound other than being a compound that includes at least two polymerizable functional groups.

Examples thereof include ethylene glycol di(meth)acrylate, (poly)ethylene glycol di(meth)acrylate, propylene glycol di(meth)acrylate, (poly)propylene glycol di(meth)acrylate, pentaerythritol tetra(meth)acrylate, pentaerythritol tri(meth)acrylate, pentaerythritol di(meth)acrylate, trimethylolpropane tri(meth)acrylate, dipentaerythritol hexa(meth)acrylate, dipentaerythritol penta(meth)acrylate, glycerol tri(meth)acrylate, glycerol di(meth)acrylate, 1,6-hexanediol di(meth)acrylate, neopentyl glycol di(meth)acrylate, tetramethylolmethane tri(meth)acrylate, tetramethylolpropane tetra(meth)acrylate, tricyclodecane dimethanol di(meth)acrylate, and bisphenol A (poly)ethoxylate di(meth)acrylate.

The polymer forming the electrically insulative coating is required to include one type or two or more types of a constitutional unit derived from the polymerizable compound, and may include other compounds as necessary. However, the polymer preferably includes structural units derived from the polymerizable compound in a proportion of 50 mass% or more, and more preferably 90 mass% or more from a viewpoint of ensuring excellent electrical insulation.

Although no specific limitations are placed on the thickness of the electrically insulative coating, an average thickness of 50 nm or more is preferable, and an average thickness of 60 nm or more is more preferable for achieving high electrical insulation. Moreover, the upper limit for the thickness of the electrically insulative coating is preferably an average value of approximately 1 µm in view of achieving a balance with thermal conductivity. The average thickness of the electrically insulative coating is taken to be a value obtained by measuring the average thickness of the electrically insulative coating for one insulation coated carbon fiber sample in a manner that includes both a thickest part and a thinnest part of the electrically insulative coating, and then calculating an average value of the average thicknesses of two samples.

### <Method of producing insulation coated carbon fiber>

Next, a method of producing insulation coated carbon fiber is described with reference to the drawings as necessary.

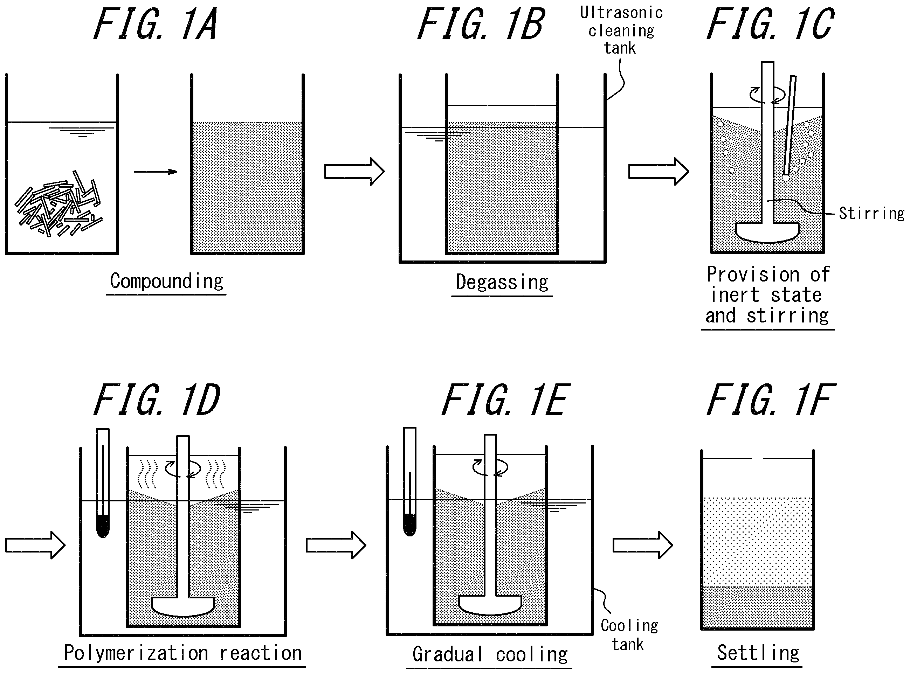

As illustrated in FIG. 1, a method of producing insulation coated carbon fiber according to the present disclosure includes mixing one type or two or more types of a polymerizable compound having a double bond, carbon fiber, and a reaction initiator with a solvent to obtain a mixture ((a) in FIG. 1), and subsequently stirring the mixture while imparting energy on the mixture ((d) in FIG. 1) to form a coating of a polymer formed from the polymerizable compound on at least part of the carbon fiber.

By mixing the previously described polymerizable compound with carbon fiber and a reaction initiator in a solvent and imparting energy thereto, an electrically insulative coating of a desired thickness can be formed on the carbon fiber without causing aggregation of individual carbon fibers. Moreover, a coating that has excellent electrical insulation compared to conventional coatings can be formed, and, as a result, electrical insulation of the obtained insulation coated carbon fiber can be significantly improved while maintaining high thermal conductivity.

### (Mixing of materials)

As illustrated in (a) of FIG. 1, the method of producing insulation coated carbon fiber according to the present disclosure includes mixing one type or two or more types of a polymerizable compound having a double bond, carbon fiber, and a reaction initiator with a solvent to obtain a mixture.

The carbon fiber and the polymerizable compound that are used in production of insulation coated carbon fiber according to the present disclosure may be selected as appropriate depending on the application and details pertaining thereto are the same as previously described.

No specific limitations are placed on the reaction initiator that is used in production of insulation coated carbon fiber according to the present disclosure so long as the reaction initiator dissolves in the solvent and is capable of initiating a polymerization reaction of the polymerizable compound. Commonly known reaction initiators can be used as appropriate. Examples of reaction initiators that can be used include thermal polymerization initiators such as azo compounds and organic peroxides, and ultraviolet polymerization initiators such as alkylphenone polymerization initiators and acylphosphine oxide polymerization initiators. Of these reaction initiators, an azo compound or an organic peroxide is preferably used.

Moreover, no specific limitations are placed on the solvent used in production of insulation coated carbon fiber according to the present disclosure other than being a solvent in which the polymerizable compound and the reaction initiator dissolve. For example, one commonly known solvent or a mixture of two or more commonly known solvents may be used.

However, a solvent in which the polymerizable compound dissolves and in which the polymer formed from the polymerizable compound does not dissolve is preferable in terms of promoting the polymerization reaction and raising the performance of the electrically insulative coating obtained through polymerization. In other words, it is preferable to use a solvent in which solubility of the polymerizable compound serving as a monomer is higher than solubility of the polymer of this polymerizable compound.

The use of a good solvent for the polymerizable compound promotes the polymerization reaction, whereas the use of a poor solvent for the polymer enables formation of a good coating without the electrically insulative coating that is obtained re-dissolving.

Note that when judging whether or not a solvent is a good solvent, this judgment is made at a temperature corresponding to the temperature during polymerization (i.e., during heating or photoirradiation).

Specific examples of solvents that can be used include hexane, cyclohexane, diethyl ether, polyethers (glymes), γ-butyrolactone, N-methylpyrrolidone, acetonitrile, tetrahydrofuran, ethyl acetate, xylene, toluene, benzene, dimethyl sulfoxide, acetone, methyl ethyl ketone, ethanol, methanol, and water. The solvent may be prepared through appropriate mixing of any of these solvents. Of such solvents, ethanol or a mixture of ethanol and isopropyl alcohol is preferable in a case in which divinylbenzene is used as the polymerizable compound, and ethanol or a mixture of ethanol and toluene is preferable in a case in which a (meth)acrylate compound is used as the polymerizable compound.

### (Degassing)

In the method of producing insulation coated carbon fiber according to the present disclosure, degassing may be performed as necessary as illustrated by (b) in FIG. 1 after the polymerizable compound, the carbon fiber, and the reaction initiator have been mixed in the solvent. The degassing is performed in order to promote surface wettability of the carbon fiber. The method of degassing is not specifically limited and may, for example, be a method in which pressure reduction or ultrasound is used.

### (Inert state provision)

In the method of producing insulation coated carbon fiber according to the present disclosure, an inert state may be provided as illustrated by (c) in FIG. 1 after mixing of materials ((a) in FIG. 1), or before or after degassing ((b) in FIG. 1).

The inert state is provided in order to prevent impairment of the subsequently described polymerization reaction. The method by which an inert state is provided is not specifically limited and may, for example, involve stirring the mixture while supplying an inert gas, such as nitrogen, into the mixture by bubbling.

### (Polymerization reaction)

In the method of producing insulation coated carbon fiber according to the present disclosure, the mixture is stirred while imparting energy on the mixture as illustrated by (d) in FIG. 1 to form a coating of a polymer formed from the polymerizable compound on at least part of the carbon fiber.

The energy is not specifically limited and may, for example, be in the form of heat, ultraviolet rays, or the like. Of these examples, it is preferable that heat is used to perform the polymerization reaction in the present disclosure because this enables simple and reliable formation of the electrically insulative coating.

In a case in which the energy is heat, the temperature of the mixture during polymerization is preferably 0°C to 200°C, and more preferably 25°C to 150°C. As a result, the electrically insulative coating can be reliably formed and a coating having high electrical insulation can be obtained.

In the method of producing insulation coated carbon fiber according to the present disclosure, cooling (gradual cooling) to room temperature is performed as illustrated by (e) in FIG. 1 after the polymerization reaction ((d) in FIG. 1).

The cooling is performed because lowering the temperature of the solvent causes a small amount of polymer that is dissolved in the solvent to precipitate as the electrically insulative coating. The method of gradual cooling is not specifically limited and may, for example, be a method in which the reaction vessel is immersed in a cooling tank while monitoring the temperature as illustrated by (e) in FIG. 1.

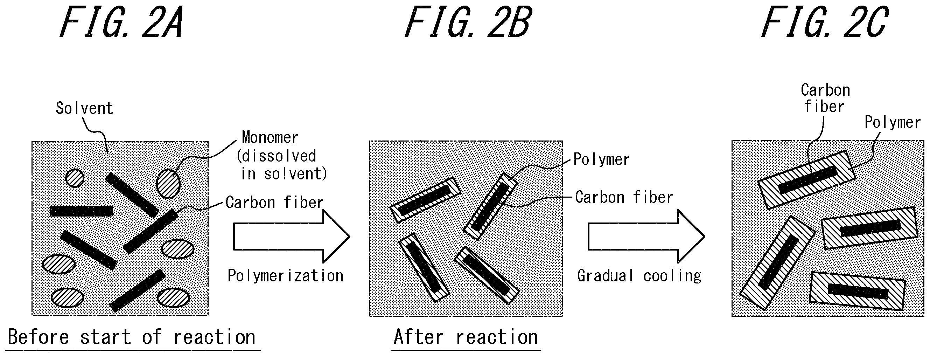

The following description considers the process by which the carbon fiber is coated by the polymer formed from the polymerizable compound through the polymerization reaction with reference to (a) to (c) in FIG. 2.

Prior to the polymerization reaction, the carbon fiber and the polymerizable compound (monomer) are present in a dissolved/dispersed state in the solvent under stirring as illustrated by (a) in FIG. 2. After energy is imparted, the monomer is polymerized in solution, and once polymerization proceeds to a critical chain length for precipitation in solution, the polymer precipitates on the surface of the carbon fiber with the carbon fiber acting as a precipitation trigger (nucleus) as illustrated by (b) in FIG. 2. During the above, the polymer that is formed, when taken as a whole, is insoluble in the solvent or dissolves in the solvent in a miniscule amount. In a case in which polymerizable functional groups remain present in the precipitated polymer, monomer reaction is expected to occur and physical/chemical lamination through further precipitation is expected. Subsequent gradual cooling lowers the reaction tank temperature and reduces solubility in the solvent, which is expected to result in even the small amount of polymer that may be dissolved in the solvent contributing to thickness of the polymer film as illustrated by (c) in FIG. 2. Moreover, concerns in relation to joining can be alleviated by making this contribution gradual. The polymerization method described herein enables formation of a homogeneous coating having high selectivity with respect to the surface of the carbon fiber compared to emulsion polymerization in which embedding occurs by random phase separation. Moreover, the electrically insulative coating that is formed has high electrical insulation compared to conventional electrically insulative coatings.

The polymerization reaction is a reaction that causes precipitation of an electrically insulative coating formed from a polymer on carbon fiber and is a reaction that is similar to precipitation polymerization. However, the polymerization reaction differs from normal precipitation polymerization in terms that the main mechanism of the reaction is not electrostatic attraction/adsorption or monomer and initiator component adsorption and bonding through surface functional groups.

### (Sedimentation)

In the method of producing insulation coated carbon fiber according to the present disclosure, the resultant insulation coated carbon fiber may be caused to sediment as illustrated by (f) in FIG. 1 after the gradual cooling ((e) in FIG. 1).

Sedimentation of the resultant insulation coated carbon fiber facilitates separation from the solvent. The sedimentation may be performed by leaving the reaction vessel at rest for a certain time after the gradual cooling.

### <Carbon fiber-containing composition>

Next, a carbon fiber-containing composition according to the present disclosure is described.

The carbon fiber-containing composition according to the present disclosure contains the above-described insulation coated carbon fiber according to the present disclosure.

The resultant carbon fiber-containing composition has excellent electrical insulation while having high thermal conductivity through inclusion of the insulation coated carbon fiber according to the present disclosure.

Components other than carbon fiber that are contained in the carbon fiber-containing composition according to the present disclosure can be selected as appropriate depending on the application without any specific limitations.

For example, in a case in which the carbon fiber-containing composition according to the present disclosure is to be used for a thermally conductive sheet, the carbon fiber-containing composition may further contain a binder resin formed from silicone or the like in addition to the carbon fiber.

### <Thermally conductive sheet>

Next, a thermally conductive sheet according to the present disclosure is described.

The carbon fiber-containing composition according to the present disclosure contains the above-described carbon fiber-containing composition according to the present disclosure (is formed using the thermally conductive sheet).

The resultant thermally conductive sheet has excellent electrical insulation while having high thermal conductivity as a result of being formed using the carbon fiber-containing composition according to the present disclosure.

The carbon fiber-containing composition contained in the thermally conductive sheet according to the present disclosure is a composition that contains a binder resin and the insulation coated carbon fiber according to the present disclosure, and is obtained, for example, by shaping this carbon fiber-containing composition into the form of a sheet and performing curing thereof.

The method by which the thermally conductive sheet according to the present disclosure is produced is not specifically limited and commonly known methods may be used as appropriate.

For example, in a case in which it is desirable to increase orientation of the carbon fiber in the thermally conductive sheet, the thermally conductive sheet may be produced by a method of producing a thermally conductive sheet that is disclosed in JP 2015-29075 A.

### EXAMPLES

The following provides a more specific description of the present disclosure based on examples. However, the present disclosure is not in any way limited by the following examples.

In Example 1 and Comparative Example 1, production of coated carbon fiber was carried out.

### (Example 1)

### Samples 1 to 7, 15, and 16: Production of carbon fiber coated with polymer of divinylbenzene

Coated carbon fiber of Sample 1 was produced by the following procedure.

A glass container was charged with 210 g of pitch-based carbon fiber having an average fiber diameter of 9 µm and an average fiber length of 100 µm (product name: XN-100-10M; produced by Nippon Graphite Fiber Co., Ltd.) and 1,000 g of ethanol, which were then mixed using an impeller to obtain a slurry. Nitrogen was supplied into the slurry at a flow rate of 160 mL/minute to provide an inert state while also adding 52.5 g of divinylbenzene to the slurry.

Once 10 minutes had passed after addition of the divinylbenzene, 1.05 g of a polymerization reaction initiator (oil-soluble azo polymerization initiator) that had been dissolved in 50 g of ethanol in advance was added to the slurry. After this addition, stirring was performed for 5 minutes, and then provision of an inert state through nitrogen was stopped.

Thereafter, the slurry was maintained at 70°C for 3 hours under stirring, and was then cooled to 40°C. After this cooling, the slurry was left at rest for 15 minutes to allow sedimentation of solid content dispersed in the slurry. After this sedimentation, a supernatant was removed by decantation and then the solid content was washed by re-adding 750 g of solvent and performing stirring for 15 minutes.

After this washing, the solid content was collected by suction filtration and the collected solid content was dried for 6 hours at 100°C to obtain the coated carbon fiber of Sample 1.

Production was carried out for Samples 2 to 7, 15, and 16 by the same procedure as described for Sample 1. The detailed conditions (compounding conditions and reaction conditions) are shown in Table 1.

### Samples 8 to 11: Production of carbon fiber coated with polymer of (meth)acrylate compound

Coated carbon fiber of Sample 8 was produced by the following procedure.

A glass container was charged with 210 g of pitch-based carbon fiber having an average fiber diameter of 9 µm and an average fiber length of 100 µm (product name: XN-100-10M; produced by Nippon Graphite Fiber Co., Ltd.) and 1,000 g of ethanol, which were then mixed using an impeller to obtain a slurry. Nitrogen was supplied to the slurry at a flow rate of 160 mL/minute to provide an inert state while also adding 26.25 g of each of a (meth)acrylate compound B (dicyclopentanyl methacrylate) and a (meth)acrylate compound C (trimethylolpropane trimethacrylate) to the slurry.

Once 10 minutes had passed after addition of the (meth)acrylate compounds B and C, 1.05 g of a polymerization reaction initiator (oil-soluble azo polymerization initiator) that had been dissolved in 50 g of ethanol in advance was added into the slurry. After this addition, stirring was performed for 5 minutes, and then provision of an inert state through nitrogen was stopped.

Thereafter, the slurry was maintained at 70°C for 3 hours under stirring, and was then cooled to 40°C. After this cooling, the slurry was left at rest for 15 minutes to allow sedimentation of solid content dispersed in the slurry. After this sedimentation, a supernatant was removed by decantation and then the solid content was washed by re-adding 750 g of solvent and performing stirring for 15 minutes.

After this washing, the solid content was collected by suction filtration and the collected solid content was dried for 12 hours at 70°C to obtain the coated carbon fiber of Sample 8.

Production was carried out for Samples 9 to 11 by the same procedure as described for Sample 8. The detailed conditions (compounding conditions and reaction conditions) are shown in Table 1.

### (Comparative Example 1)

### Samples 13 and 14: Production of carbon fiber coated with silica compound

Coated carbon fiber of Sample 13 was produced by the following procedure.

A polyethylene container was charged with 300 g of pitch-based carbon fiber having an average fiber diameter of 9 µm and an average fiber length of 100 µm (product name: XN-100-10M; produced by Nippon Graphite Fiber Co., Ltd.), 600g of tetraethoxysilane, and 2,700 g of ethanol, which were then mixed using an impeller.

Thereafter, a reaction initiator (10% ammonia water) was added over 5 minutes while performing heating to 50°C. Stirring was performed for 3 hours with the point at which solvent addition was completed taken to be 0 minutes.

After completion of this stirring, cooling was performed and solid content was collected by suction filtration. The solid content was washed with water and ethanol, and suction filtration was performed again to collect the solid content.

The collected solid content was dried for 2 hours at 100°C, and was subsequently baked for 8 hours at 200°C to obtain the coated carbon fiber of Sample 13 as a comparative example.

Production was carried out for Sample 14 by the same procedure as described for Sample 13. The detailed conditions (compounding conditions and reaction conditions) are shown in Table 1.

The samples obtained through Example 1 and Comparative Example 1 were then used to produce compositions as Example 2 and Comparative Example 2.

### (Example 2 and Comparative Example 2)

Compositions of Samples 1 to 16 were each obtained by compounding 4 g of the coated carbon fiber of the corresponding sample with a two-part addition reaction-type liquid silicone resin in respective amounts of 2.7 g and 3.3 g (parts by mass shown in Table 1), and performing stirring using a planetary mixer (THINKY MIXER produced by Thinky Corporation).

Thereafter, a coater was used to apply the composition of each sample, with a thickness of 1 mm, onto release treated PET film of 125 µm in thickness while sandwiching the composition of the sample with PET film, and then heating was performed for 6 hours at 100°C as shown in Table 1 to cure the mixture and shape the composition of the sample into the form of a sheet.

### (Evaluation)

The following evaluations were performed with respect to the obtained samples. The evaluation results are shown in Table 1.

### (1) Yield

The yield of each coated carbon fiber sample was calculated by measuring the mass of the coated carbon fiber and dividing this mass by the mass of carbon fiber that was used. A larger value for the yield indicates a larger amount of coating.

Note that the yield was not measured for Sample 12 because a coating was not formed. Moreover, the yield was not measured for Sample 16 because a coating could not be formed due to gelation and for Sample 15 because a coating could not be formed due to dissolution of the coating.

### (2) Coating thickness

For each coated carbon fiber sample, a focused ion beam (FIB) was used to cut the coated carbon fiber and then a transmission electron microscope (TEM) was used to observe a cross-section thereof in order to measure the average thickness of the coating.

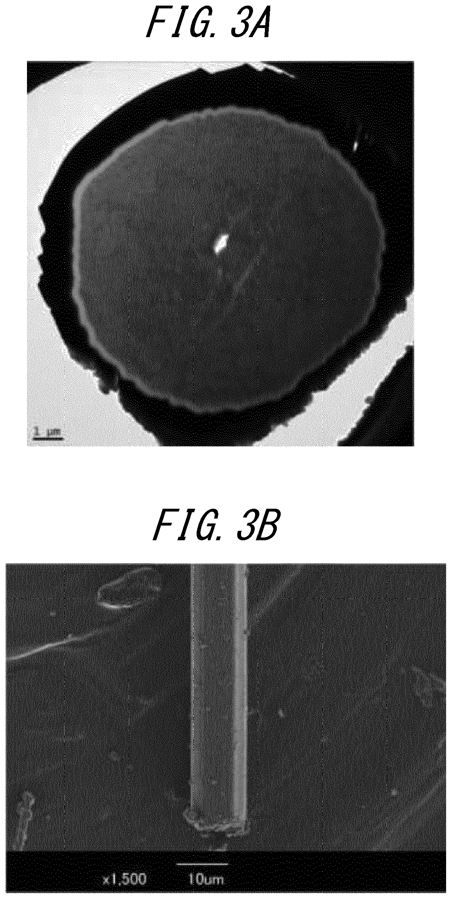

As one example, images of coated carbon fiber in Sample 1 are illustrated in FIGS. 3A and 3B. FIG. 3A is an image obtained by observing a cross-section of the coated carbon fiber and FIG. 3B is an image obtained by observing the coated carbon fiber from the side.

### (3) Resistance of coated carbon fiber

Each coated carbon fiber sample was loaded into a tubular container (diameter: 9 mm; length: 15 mm) such as to have a packing density of 0.750 g/cm³. A high resistance meter was then used to measure resistance at various applied voltages by a two-terminal method (however, note that a four-terminal method using a low resistance meter was adopted at an applied voltage of 10 V for Samples 12 and 15).

Note that in a case in which the sample could not be filled into the tubular container (Sample 16), it was judged that aggregation had occurred.

Samples having an extremely high resistance value that exceeded the measurement range (refer to Table 1) are indicated as "Over range" in Table 1, and samples having an extremely low resistance value that fell below the measurement range (refer to Table 1) are indicated as "Under range" in Table 1.

### (4) Resistance of composition

A resistance meter (Hiresta UX produced by Mitsubishi Chemical Analytech Co., Ltd.) was used to measure a volume resistance value at various applied voltages with respect to each sample that had been shaped into the form of a sheet.

Samples having an extremely high resistance value that exceeded the measurement range (refer to Table 1) are indicated as "Over range" in Table 1, and samples having an extremely low resistance value that fell below the measurement range (refer to Table 1) are indicated as "Under range" in Table 1.

Since the volume resistance measurement range is dependent on the resistance value measurement range, the units of the measurement ranges in Table 1 are Ω.

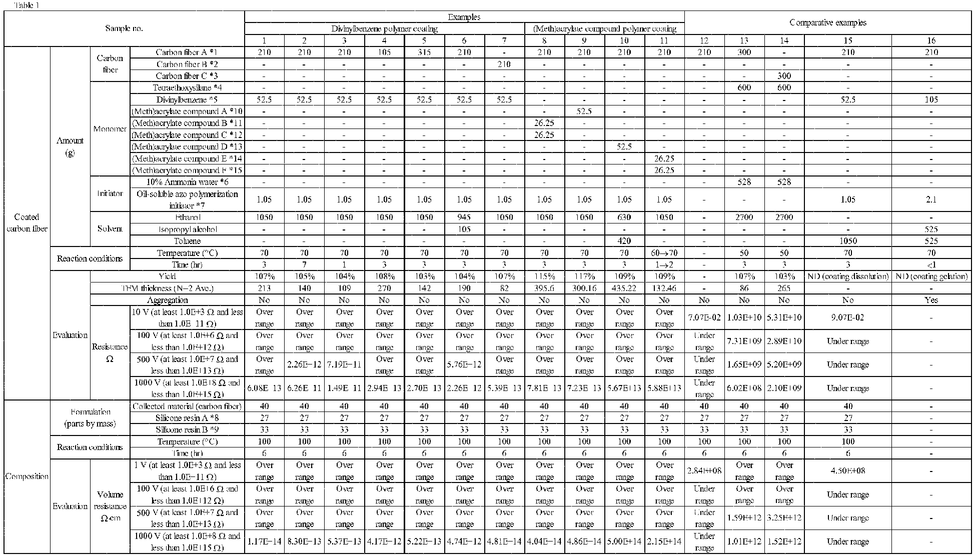

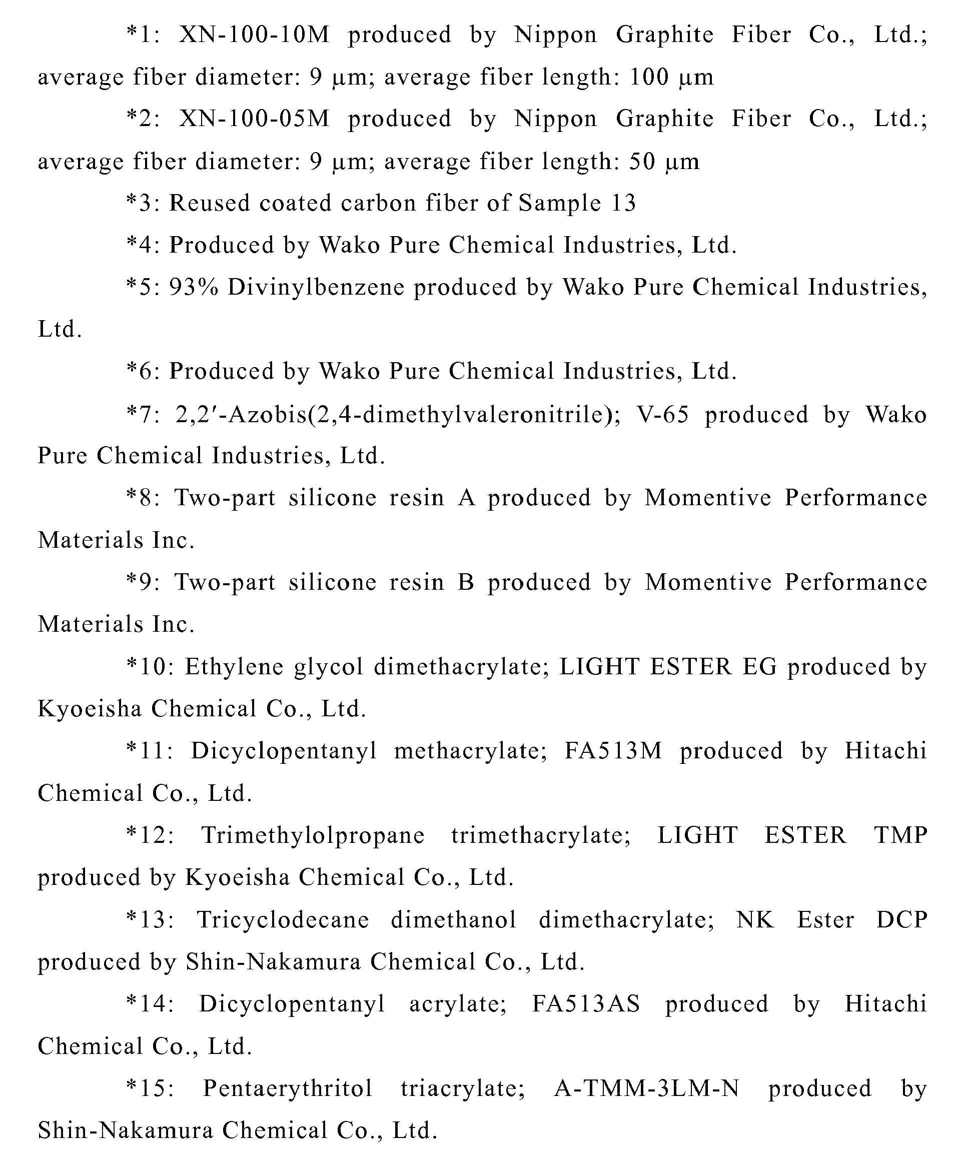

It can be seen from Table 1 that the samples of the examples each had high resistance compared to the samples of the comparative examples, and it was possible to form a coating having excellent electrical insulation. The samples of the examples also displayed good results in terms of other criteria (yield and thickness).

### INDUSTRIAL APPLICABILITY

According to the present disclosure, it is possible to provide insulation coated carbon fiber and a method of producing insulation coated carbon fiber having excellent electrical insulation while having high thermal conductivity. Moreover, it is possible to provide a carbon fiber-containing composition and a thermally conductive sheet that are obtained using this insulation coated carbon fiber and that have excellent thermal conductivity and electrical insulation.

## Claims

1. Insulation coated carbon fiber comprising carbon fiber that is at least partially coated by an electrically insulative coating, wherein
the electrically insulative coating is a polymer formed from one type or two or more types of a polymerizable compound having a double bond, at least one of which is a polymerizable compound including at least two polymerizable functional groups.

2. The insulation coated carbon fiber according to claim 1, wherein
the polymerizable compound including at least two polymerizable functional groups is divinylbenzene.

3. The insulation coated carbon fiber according to claim 1, wherein
the polymerizable compound including at least two polymerizable functional groups is a (meth)acrylate compound.

4. The insulation coated carbon fiber according to any one of claims 1 to 3, wherein
the electrically insulative coating has a thickness of 50 nm or more.

5. A method of producing insulation coated carbon fiber comprising:
mixing one type or two or more types of a polymerizable compound having a double bond, carbon fiber, and a reaction initiator with a solvent to obtain a mixture; and
subsequently stirring the mixture while imparting energy on the mixture to form a coating of a polymer formed from the polymerizable compound on at least part of the carbon fiber.

6. The method of producing insulation coated carbon fiber according to claim 5, wherein
the solvent is a solvent in which the polymerizable compound dissolves and the polymer formed from the polymerizable compound does not dissolve.

7. The method of producing insulation coated carbon fiber according to claim 5 or 6, wherein
the energy is imparted by heating, and the mixture has a temperature of 0°C to 200°C in the heating.

8. A carbon fiber-containing composition comprising the insulation coated carbon fiber according to any one of claims 1 to 4.

9. A thermally conductive sheet comprising the carbon fiber-containing composition according to claim 8.
